# EUROPÄISCHE PATENTSCHRIFT

(11) **EP 0 643 346 B1**
(45) Veröffentlichungstag und Bekanntmachung des Hinweises auf die Patenterteilung: **18.03.1998**
(21) Anmeldenummer: 94113841.4
(22) Anmeldetag: 03.09.1994
(51) Int. Cl.: G05D 16/06

(54) **Materialregelventil**
Control valve for product
Vanne de régulation pour produit

(30) Priorität: 09.09.1993 DE 4330482
(43) Veröffentlichungstag der Anmeldung: 15.03.1995
(73) Patentinhaber: ABB PATENT GmbH, 68309 Mannheim (DE)
(72) Erfinder: Nussbaum, Herbert, D-63579 Freigericht (DE)
(74) Vertreter: Rupprecht, Klaus, Dipl.-Ing.

(56) Entgegenhaltungen:
- EP-A- 0 198 381
- EP-A- 0 332 389
- CH-A- 244 134
- DE-A- 2 816 479
- DE-A- 4 118 190
- US-A- 2 990 852
- US-A- 3 552 431

## Beschreibung

Die Erfindung betrifft ein Materialregelventil mit einem Gehäuse mit darin angeordneten ersten und zweiten Kammern, welche erste Kammer einen Anschluß für ein Druckmedium aufweist und welche zweite Kammer eine Zulauföffnung sowie einen Auslaß für zuzuführendes Material aufweist, welche erste und zweite Kammern mittels einer Membran voneinander getrennt sind, die mit einem Zwischenstück versehen ist, das über einen Stößel ein Drosselventil in der Zulauföffnung beaufschlagt.

Bei der Zuführung von druckbeaufschlagten Fluiden, insbesondere von Farbstoffen, die zur Beschichtung von Gegenständen einer Beschichtungseinrichtung unter Druck zugeführt werden, ist der jeweilige Förderdruck, der gleichzusetzen ist mit der geförderten Materialmenge, von maßgeblicher Bedeutung für die Beschichtungsqualität.

Für die Einstellung des jeweils erforderlichen Förderdrucks werden üblicherweise sogenannte Druckregler oder Materialregelventile entsprechend der eingangs genannten Art eingesetzt. Hierbei werden zwei Druckräume durch eine elastische Wand in Form einer Membran voneinander getrennt, wobei an der Membran eine Betätigungsvorrichtung für ein Drosselventil zur Regelung des Zulaufdrucks und damit der Zulaufmenge des zuzuführenden Fluids vorgesehen ist, welches den einen Druckraum durchströmt. Abhängig von der Höhe des in dem anderen Druckraum herrschenden Gegendrucks, d. h. abhängig von der bestehenden Druckdifferenz, lenkt die Membran mehr oder weniger aus und führt demgemäß zu einer druckabhängigen Öffnungsstellung des genannten Drosselventils.

Dies führt bei vollem Gegendruck oder Zuführdruck zur Maximalöffnung des Drosselventils, hingegen bei minimalem Gegendruck und hohem Zuführdruck zur Schließung des Drosselventiles. Zwischen diesen beiden Stellungen erfolgt die Betätigung des Drosselventiles durch die beiderseits druckbeaufschlagte Membran.

Aufgrund von ständigen, nicht zu vermeidenden Druckschwankungen, insbesondere jedoch bei Druckstößen, auf der Zuführseite kann infolge der Trägheit der oben beschriebenen Anordnung der Fall eintreten, daß eine unzulässig hohe Fluidmenge das Drosselventil bereits passiert hat, ehe der hieraus resultierende Fluiddruck auf die Membran wirkt und hierdurch die Schließung des Drosselventils herbeiführt. Diese Problematik führt, wie bereits ausgeführt, zu entsprechenden Störungen beim Beschichtungsvorgang. Weiter ist aus dem Dokument DE-A1-41 181 190 eine Ventileinrichtung bekannt, bei der ein Kugelförmiges Verschlußelement mittels einer vorspannfeder gegen einen schwimmeden Ventilsitz gedruckt wird.

Ausgehend vom obergenannten Stand der Technik ist es daher Aufgabe der Erfindung, ein Materialregelventil der eingangs genannten Art zu schaffen, das auf möglichst einfache Weise sicher gegen Druckstöße auf der Zuführseite ist.

Diese Aufgabe wird erfindungsgemäß durch die kennzeichnenden Merkmale des Patentanspruchs 1 gelöst. Danach ist vorgesehen, daß das in der Zulauföffnung befindliche Drosselventil zweistufig ausgebildet ist. In einer ersten Stufe in Zulaufrichtung ist eine Kugel als Sperrelement vorgesehen, der sich in einer zweiten Stufe ein Dichtkonus als Sperrelement anschließt.

Gemäß einer bevorzugten Ausführungsform ist die Kugel in einem ersten Ventilraum angeordnet und legt sich dort in Sperrstellung an einen ersten Dichtsitz an. In dieser Stellung ist es dem Dichtkonus möglich bei entsprechender Ansteuerung durch die Membran, die Kugel vom ersten Dichtsitz abzuheben.

Die Wirkungsweise dieser Anordnung wird im folgenden beschrieben.

Bei normaler Druckbeaufschlagung stellt sich zwischen dem ersten und dem zweiten Druckraum in dem Materialregelventil ein gewisses Gleichgewicht ein, dem entsprechend über den genannten Stößel das Drosselventil eine bestimmte Öffnungsstellung einnimmt. Sobald in der Zulaufleitung ein unzulässig hoher Druck, ein sogenannter Druckstoß, auftritt, wird von dem zuströmenden Fluid zunächst die erwähnte Kugel beaufschlagt, die aufgrund ihrer großen Oberfläche sowie ihrer freien Beweglichkeit in dem ersten Ventilraum umgehend in ihre Sperrstellung an den ersten Dichtsitz gedrückt wird.

In der Zeit, bis die Kugel vollständig am ersten Dichtsitz anliegt, kann dennoch Fluid seitlich vorbeiströmen in Richtung auf die zweite Stufe des Drosselventils zu. Der Dichtkonus, der aufgrund der Bewegung der Kugel impulsartig von dieser beaufschlagt wird, bewegt sich geringfügig zeitversetzt ebenfalls in seine Schließstellung. Hierdurch bedingt verengt sich dementsprechend der Strömungsquerschnitt zwischen Dichtkonus und dem ihm zugeordneten zweiten Dichtsitz derart, daß nur noch eine kleine Menge an Druckfluid hindurchtreten kann, bevor die Schließung des Drosselventils vollzogen ist. In der Zeitspanne, bis aufgrund der Reaktionskräfte aus der Membran das Drosselventil wieder geöffnet wird, ist der Druckstoß abgebaut, so daß das Druckfluid wieder im Normalbetrieb zuströmt.

Gemäß einer vorteilhaften Ausgestaltung der Erfindung kann vorgesehen sein, daß der erste Ventilraum, in welchem sich die Kugel befindet, auf der Eintrittsseite ein Anschlag angeordnet ist, der die Kugel in dem ersten Ventilraum fesselt. Zweckmäßiger Weise kann dieser Anschlag als weiterer Dichtsitz ausgebildet sein, der gemeinsam mit der Kugel dann als Rückströmsperre für rückströmendes Druckfluid dient.

Wie bereits erwähnt, ist auch für den Dichtkonus, der am freien Ende des von dem Zwischenstück an der Membran beaufschlagten Stößels angeformt ist, ein zweiter Dichtsitz in der Zulauföffnung vorgesehen, an welchem sich der Dichtkonus in Sperrstellung anlegt. Entsprechend einer vorteilhaften Ausführung der Erfindung ist der genannte Stößel eine Zylinderschraube, die dazu dient, das Zwischenstück mit der Membran zu verbinden. Hierbei ist der Schraubenkopf, der zu seiner Betätigung einen Querschlitz trägt, an seinem Umfang zumindest bereichsweise konisch geformt und bildet so den Dichtkonus, der mit der hierzu kompatiblen Dichtfläche des zweiten Dichtsitzes in der Zulauföffnung die zweite Dichtstufe bildet.

Entsprechend einer sehr vorteilhaften Weiterbildung der Erfindung ist dabei vorgesehen, daß der Schaft des Stößels sich vom Dichtkonus, d. h. vom Schraubenkopf her, in Richtung Zwischenstück zumindest bereichsweise konisch verjüngt. Dies hat einen entscheidenden Vorteil bezüglich der Drosselung des durchströmenden Materialfluids. Aufgrund der Konizität des Schaftes, der die zylindrisch geformte Zulauföffnung durchgreift, wird erreicht, daß bei geringen axialen Hüben eine überproportionale Querschnittsänderung des freien Strömungsquerschnittes herbeigeführt wird. Auch diese Gestaltungsvariante trägt demgemäß trotz ihrer einfachen Form wesentlich zur gewünschten Drosselungscharakteristik des Materialregelventils bei.

Diese und weitere vorteilhafte Ausgestaltungen sind Gegenstand der Unteransprüche.

Anhand eines in den Figuren dargestellten Ausführungsbeispieles sollen die Erfindung, vorteilhafte Ausgestaltungen und Verbesserungen sowie besondere Vorteile der Erfindung näher erläutert und beschrieben werden.

Es zeigen:
- Figur 1: einen Längsschnitt durch ein Materialregelventil
- Figur 2: eine ausschnittweise Vergrößerung der in Figur 1 gezeigten Zulauföffnung mit Drosselventil.

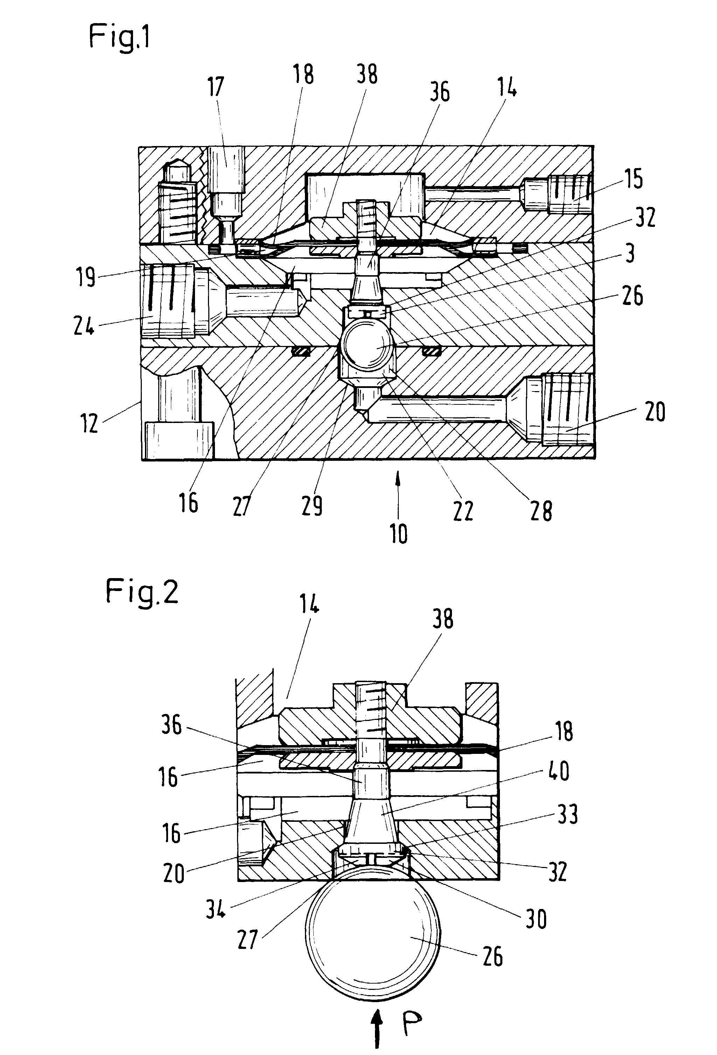

In Figur 1 ist ein Längsschnitt durch ein erfindungsgemäßes Materialregelventil 10 mit einem dreiteiligen Gehäuse 12 gezeigt, in welchem eine erste Kammer 14 und eine zweiten Kammer 16 angeordnet sind, die durch eine Membran 18 voneinander getrennt sind. Die erste Kammer 14 besitzt einen Anschluß 15 für Druckfluid, welches in der ersten Kammer 14 ein vorbestimmtes Druckniveau einstellt. Die zweite Kammer 16 besitzt eine Zulauföffnung 20 mit einem darin angeordneten Drosselventil 22 sowie einen Auslaß 24, der mit einer hier nicht näher dargestellten Verarbeitungseinrichtung verbindbar ist. Des weiteren ist ein Leckageanschluß 17 vorgesehen, der mit einem von der Membran gebildeten Ringraum 19 verbunden ist und durch Leckagen an der Membran 18 eingetretenes Druckfluid aus der zweiten Kammer 16 in den Ringraum 19 abführt.

Das hier interessierende Drosselventil 22, das in der Figur 2 in vergrößerter Darstellung gezeigt ist, sorgt dafür, daß im Falle unzulässiger Druckerhöhungen in der Zulauföffnung 20 sich diese nicht in das in Durchflußrichtung hinter dem Drosselventil 22 befindliche System auswirken können. Zu diesem Zweck ist das Drosselventil 22 zweistufig ausgeführt. In einer ersten Stufe ist eine Kugel 26 vorgesehen, die frei beweglich in einem ersten Ventilraum 28 angeordnet ist. Austrittsseitig bildet der erste Ventilraum 28 einen ersten Dichtsitz 27, der entsprechend dem Krümmungsradius der Kugel als ringförmiger Innenkonus ausgebildet ist.

Unmittelbar an den ersten Ventilraum 28 schließt sich die zweite Stufe des Drosselventils mit einem zweiten Ventilraum 30 an, in welchem ein Dichtkonus 32 für die Abdichtung an einem ebenfalls als ringförmiger Innenkonus ausgebildeten zweiten Dichtsitz 33 sorgt. Dieser Dichtkonus 32 ist an einen Schraubenkopf 34 einer als Stößel 36 dienenden Zylinderschraube angeformt, die mit einem Zwischenstück 38 verbunden ist, welches an der Membran 18 zentral angeordnet ist. Der Schaft des Stößels 36 verjüngt sich konisch in einem ersten, an den Dichtkonus 32 angrenzenden Bereich 40 in axialer Richtung auf das Zwischenstück 38 zu, so daß mit zunehmender Entfernung vom Dichtkonus 32 sich der radiale Abstand zwischen der Schaftoberfläche und der Innenwand der in die zweite Kammer 16 einmündenden zylindrisch gestalteten Zulauföffnung 20 stetig vergrößert.

Die Funktionsweise dieses Materialregelventils 10 besteht darin, daß in Schließstellung, wie in Figur 1 und 2 gezeigt, in beiden Stufen des Drosselventils 22 die darin befindliche Kugel 26 und der Dichtkonus 32 an ihrem jeweils zugeordneten Dichtsitz 27, 33 anliegen. Bei entsprechendem, in der ersten Kammer 14 vorherrschenden Gegendruck übt dieser über die Membran 18 und den Stößel 36 eine Öffnungskraft auf das Drosselventil 22 aus, derzufolge zunächst der Dichtkonus 32 von seinem zweiten Dichtsitz 33 abhebt, wobei er die Kugel 26 beaufschlagt und diese sich ebenfalls aus ihrem ersten Dichtsitz 27 entfernt.

Im Falle, daß über die Zulauföffnung 20 zugeführtes Druckfluid eine kurzzeitige Druckerhöhung, z. B. Druckstoß, erfährt, wird die Kugel 26 entsprechend Pfeil P in Figur 2 beaufschlagt und in Richtung auf ihren ersten Dichtsitz 27 hin bewegt. In der Zeit, bis die Kugel 26 wegen ihres Beharrungsvermögens ihre Dichtposition eingenommen hat, kann in dem zwischen der Kugel 26 und dem ersten Dichtsitz 27 sich stetig verengenden Querschnitt Druckfluid zur zweiten Stufe des Drosselventils in die zweite Ventilkammer 30 eintreten. Diese Menge ist jedoch unvergleichlich geringer, als sie bei einer Anordnung ohne Kugel 26 wäre und beaufschlagt den mit dem Dichtkonus 32 verbundenen Schraubenkopf 34 in axialer Richtung, d. h. auf den zweiten Dichtsitz 33 zu. Auch hier kann wiederum bis zum völligen Anliegen des Dichtkonus 32 an seinem Dichtsitz 33 Druckfluid durch den zwischen dem Dichtkonus 32 und dem zweiten Dichtsitz 33 sich stetig verengenden Querschnitt hindurchtreten und gelangt so in die zweite Kammer 16 des Materialregelventils 10. Im Verlauf dieser mehrere Stufen durchlaufenden Prozedur ist die für die Weiterleitung über den Auslaß 24 zur Verfügung stehende Druckfluidmenge so weit gegenüber dem eingangsseitig an der Zulauföffnung 20 anliegenden Zulaufdruck abgefallen, daß die Verarbeitung des Druckfluids problemlos erfolgen kann.

Eine besondere Bedeutung kommt in diesem Zusammenhang der konischen Gestaltung des Schaftbereichs 40 des Stößels 36 zu, da der Außenkonus des Schaftes 40 zu einer im Verhältnis zu seiner axialen Verschiebung überproportionalen Verkleinerung des Durchflußquerschnittes zwischen dem Dichtkonus 32 und dem zugeordneten zweiten Dichtsitz 33 führt. Das bedeutet, daß bei bereits kleinen axialen Verlagerungen des Stößels 36 die Menge an Druckfluid, die diese Barriere passiert stark verringert ist. So wird mit dieser besonderen Form des Schaftes eine vorzügliche Drosselwirkung erzielt.

## Patentansprüche

1. Materialregelventil (10) mit einem Gehäuse (12) mit darin angeordneten ersten und zweiten Kammern (14, 16), welche erste Kammer (14) einen Anschluß (15) für ein Druckmedium aufweist und welche zweite Kammer (16) eine Zulauföffnung (20) sowie einen Auslaß (24) für zuzuführendes Druckfluid aufweist, welche erste und zweite Kammern (14, 16) mittels einer Membran (18) voneinander getrennt sind, die mit einem Zwischenstück (38) versehen ist, das über einen Stößel (36) ein Drosselventil (22) in der Zulauföffnung (20) beaufschlagt, dadurch gekennzeichnet, daß das Drosselventil (22) zweistufig ausgebildet ist und in einer ersten Stufe in Zulaufrichtung eine Kugel (26) als Sperrelement und in einer zweiten Stufe einen Dichtkonus (32) als Sperrelement aufweist.

2. Materialregelventil nach Anspruch 1, dadurch gekennzeichnet, daß die Kugel (26) in einem ersten Ventilraum (28) angeordnet ist und sich in Sperrstellung an einen ersten Dichtsitz (27) anlegt, aus welchem die Kugel (26) vom Stößel 36 über den Dichtkonus (32) abhebbar ist.

3. Materialregelventil nach Anspruch 2, dadurch gekennzeichnet, daß der erste Ventilraum 28 einen Anschlag (29) aufweist, der die Kugel (26) in dem ersten Ventilraum (28) fesselt.

4. Materialregelventil nach Anspruch 3, dadurch gekennzeichnet, daß der Anschlag (29) als weiterer Dichtsitz ausgebildet ist und gemeinsam mit der Kugel (26) als Rückströmsperre für durchströmendes Fluid dient.

5. Materialregelventil nach einem der vorherigen Ansprüche, dadurch gekennzeichnet, daß der Dichtkonus (32) am freien Ende des von dem Zwischenstück (38) beaufschlagten Stößels (36) angeformt ist und sich in Sperrstellung an einen zweiten Dichtsitz (32) anlegt, der in der Zulauföffnung (20) angeordnet ist.

6. Materialregelventil nach Anspruch 5, dadurch gekennzeichnet, daß der Dichtkonus (32) mit einem Schraubenkopf (34) einer den Stößel (36) bildenden Schlitzschraube verbunden ist, welche in das Zwischenstück (38) eingreift.

7. Materialregelventil nach Anspruch 5 oder 6, dadurch gekennzeichnet, daß der Schaft (40) des Stößels (36) sich vom Dichtkonus (32) in axialer Richtung zum Zwischenstück hin zumindest bereichsweise konisch verjüngt.

8. Materialregelventil nach einem der vorherigen Ansprüche, dadurch gekennzeichnet, daß die vom konisch verjüngten Stößelschaft (40) durchgriffene, in die zweite Kammer mündende Zulauföffnung (20) zylindrisch ausgebildet ist.

9. Materialregelventil nach einem der vorherigen Ansprüche, dadurch gekennzeichnet, daß der Membran (18) ein Ringraum (19) zur Leckageerfassung zugeordnet ist.

## Claims

1. Control valve (10) for a product, having a housing (12) with first and second chambers (14, 16) arranged therein, which first chamber (14) has a connection (15) for a pressure medium, and which second chamber (16) has an inlet opening (20) and an outlet (24) for pressure fluid to be fed in, which first and second chambers (14, 16) are separated from one another by means of a diaphragm (18) which is provided with an intermediate piece (38) which acts, by means of a ram (36), on a throttle valve (22) in the inlet opening (20), characterized in that the throttle valve (22) is of two-stage configuration and has a ball (26) as a blocking element in a first stage in the inlet direction and a sealing cone (32) as a blocking element in a second stage.

2. Control valve for a product according to Claim 1, characterized in that the ball (26) is arranged in a first valve space (28) and, in the blocking position, is placed against a first sealing seat (27) from which the ball (26) can be raised by the ram (36) via the sealing cone (32).

3. Control valve for a product according to Claim 2, characterized in that the first valve space (28) has a stop (29) which holds the ball (26) captive in the first valve space (28).

4. Control valve for a product according to Claim 3, characterized in that the stop (29) is configured as a further sealing seat and, together with the ball (26), serves as a return-flow barrier for fluid flowing through.

5. Control valve for a product according to one of the preceding claims, characterized in that the sealing cone (32) is moulded onto the free end of the ram (36), which is acted upon by the intermediate piece (38), and, in the blocking position, rests against a second sealing seat (32) which is arranged in the inlet opening (20).

6. Control valve for a product according to Claim 5, characterized in that the sealing cone (32) is connected to a screw head (34) of a slotted screw which forms the ram (36) and engages in the intermediate piece (38).

7. Control valve for a product according to Claim 5 or 6, characterized in that the shank (40) of the ram (36) tapers conically, at least in some areas, from the sealing cone (32) in the axial direction towards the intermediate piece.

8. Control valve for a product according to one of the preceding claims, characterized in that the inlet opening (20), through which the conically tapered ram shank (40) extends and which opens into the second chamber, is of cylindrical configuration.

9. Control valve for a product according to one of the preceding claims, characterized in that the diaphragm (18) is assigned an annular space (19) to collect leakages.

## Revendications

1. Vanne de régulation de produit (10) comportant un corps (12) avec disposées à l'intérieur de celui-ci des première et deuxième chambres (14, 16), la première chambre (14) comportant un raccord (15) pour un fluide de pression et la deuxième chambre (16) comportant un orifice d'entrée (20) et une sortie (24) pour du fluide de pression à distribuer, les première et deuxième chambres (14, 16) étant séparées l'une de l'autre par une membrane (18) pourvue d'une pièce intermédiaire (38) qui, par l'intermédiaire d'un poussoir (36), commande une vanne d'étranglement. (22) dans l'orifice d'entrée (20), caractérisée en ce que la vanne d'étranglement (22) est à deux étages et comporte dans un premier étage, vu dans la direction d'écoulement, une bille (26) en tant qu'élément de blocage et dans un deuxième étage, un cône d'étanchéité (32) en tant qu'élément de blocage.

2. Vanne de régulation de produit selon la revendication 1, caractérisée en ce que la bille (26) est disposée dans une première chambre de vanne (28) et, dans la position de blocage, repose sur un premier siège (27) duquel ladite bille (26) peut être soulevée par le poussoir (27) au-dessus du cône d'étanchéité (32).

3. Vanne de régulation de produit selon la revendication 2, caractérisée en ce que la première chambre de vanne (28) comporte une butée (29) qui retient la bille (26) dans la première chambre de vanne (28).

4. Vanne de régulation de produit selon la revendication 3, caractérisée en ce que la butée (29) est agencée en siège d'étanchéité supplémentaire et, avec la bille (26), forme un barrage anti-retour pour le fluide qui s'écoule.

5. Vanne de régulation de produit selon une des revendications précédentes, caractérisée en ce que le cône d'étanchéité (32) est aménagé à l'extrémité libre du poussoir (36) sollicité par la pièce intermédiaire (38) et, en position de blocage, repose sur un deuxième siège d'étanchéité (32) qui est aménagé dans l'orifice d'entrée (20).

6. Vanne de régulation de produit selon la revendication 5, caractérisée en ce que le cône d'étanchéité (3 2) est lié à une tête de vis (34) d'une vis à tête fendue qui forme le poussoir (36) et s'engage dans la pièce intermédiaire (38).

7. Vanne de régulation de produit selon la revendication 5 ou 6, caractérisée en ce que la tige (40) du poussoir (36) se rétrécit au moins localement en forme de cône dans la direction axiale, depuis le cône d'étanchéité (32), en direction de la pièce intermédiaire.

8. Vanne de régulation de produit selon une des revendications précédentes, caractérisée en ce que l'orifice d'entrée (20) débouchant dans la deuxième chambre et traversé par la tige de poussoir (40) qui se rétrécit en forme de cône a une forme cylindrique .

9. Vanne de régulation de produit selon une des revendications précédentes, caractérisée en ce qu'une chambre annulaire (19) de récupération des fuites est associée à la membrane (18).
